# EUROPEAN PATENT APPLICATION

(11) **EP 2 023 640 A1**
(43) Date of publication of application: **11.02.2009**
(21) Application number: 07014438.1
(22) Date of filing: 23.07.2007
(51) Int. Cl.: H04N 9/04

(54) **Color filter arrays and image sensors using the same**

(71) Applicant: VisEra Technologies Company Limited, Hsinchu 300-78 (TW)
(72) Inventor: Pang, Chin-Poh, Hsinchu City 300 Taiwan (CN); Liu, Wu-Chieh, Keelung City 204 Taiwan (CN)
(74) Representative: Urner, Peter

(57) **Abstract**

Color filter arrays (CFA) and image sensors using same are provided. A color filter array includes a two-dimensional array including a plurality of first color filters, a plurality of second color filters, and a plurality of third color filters, wherein the first, second and third color filters are periodically arranged, and at least the first, second and third color filters formed in a first region of the two-dimensional array and the first, second and third color filters formed in a second region of the two-dimensional array are symmetrically mirrored.

## Description

### BACKGROUND

The invention relates to image sensors, and more particularly to a color filter array for improving color symmetry in different regions of an image sensor.

Image sensors are necessary components in many optoelectronic devices, including digital cameras, cellular phones, and toys. Conventional image sensors include both charge coupled device (CCD) image sensors and complementary metal oxide semiconductor (CMOS) image sensors.

An image sensor typically includes a plane array of pixel cells, each pixel cell comprising a photogate, photoconductor or a photodiode having a doped region for accumulating photo-generated charge.

A periodic pattern of dyes of different colors is superimposed over the plane array of pixel cells. This pattern is known as a color filter array (CFA). A plurality of microlenses is superimposed over the color filter array (CFA). A square, or circular microlens is utilized to focus light onto one initial charge accumulation region of each of pixel cells. By collecting light from a large light collecting area and focusing it on a small photosensitive area of the image sensor microlenses may significantly improve the image sensor photosensitivity.

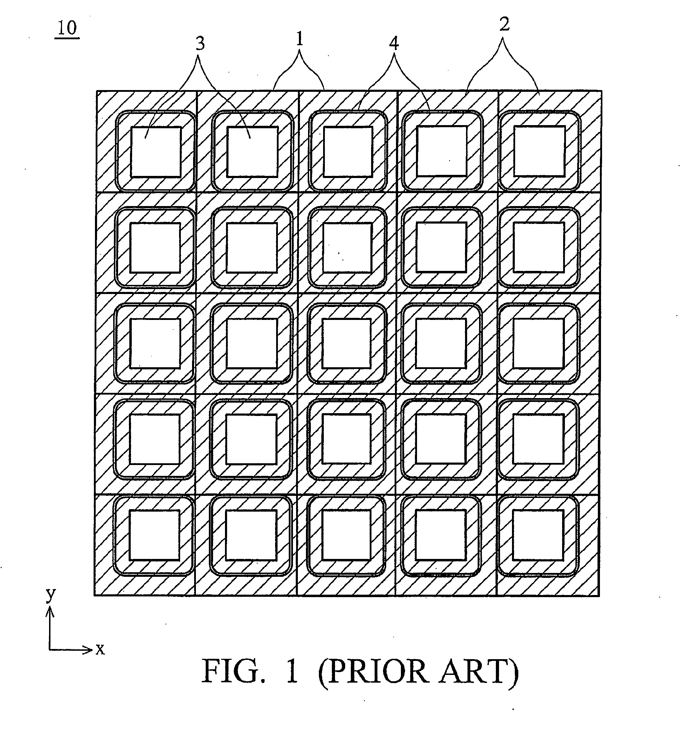

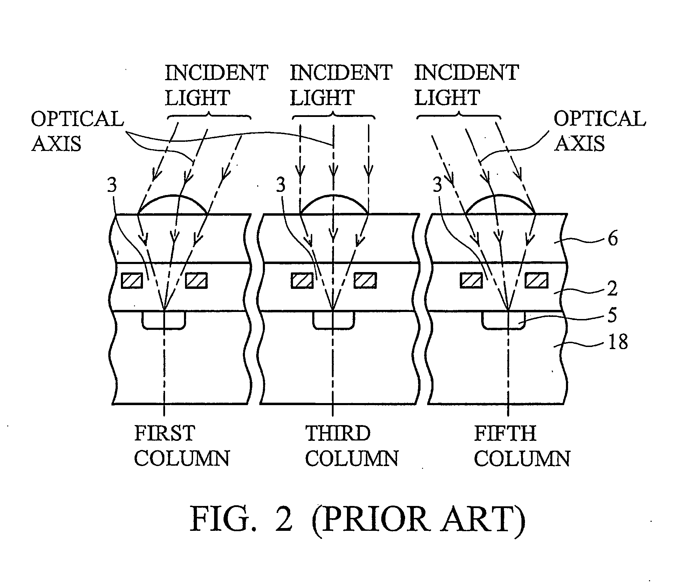

Figs. 1 and 2 are schematic diagrams showing an image sensor 10 disclosed in U. S. patent No. 6,995,800 issued to Takahashi et al. Fig. 1 shows a plan view of a pixel group and Fig. 2 shows a cross sectional view of the pixels in the first, third and fifth columns of the pixel group shown in Fig. 1. As shown in Figs. 1 and 2, reference numeral 1 represents a pixel having a photodiode or photoelectric conversion element 5 formed in the surface layer of a silicon substrate (Si substrate) 18. Reference numeral 2 represents a light-shielding layer having a light-shielding area for shielding the area of the pixel 1 excepting the photodiode 5. Reference numeral 3 represents an opening area formed through the light-shielding layer 2 through which light is incident upon the photodiode 5. Reference numeral 4 represents a microlens for converging light on the photodiode 5. Reference numeral 6 represents a color filter layer of red, green, blue or other colors. Although only a 5x5 pixels is shown in Fig. 1 for the purposes of simplicity, there may in practice be several hundred thousands to several millions of pixels disposed two-dimensionally.

Figs. 1 and 2 show the pixel 1 disposed nearer the peripheral area than the center of the pixel group has a center of gravity of the light reception area of the photodiode 5 positioned nearer to the peripheral area than the centers of gravity of the microlens 4 and opening area 3. The optical axis of light converged by the microlens 4 thus becomes coincident with the center of gravity of the light reception area of the photodiode 5.

More specifically, the pixel 1 of the first column has the centers of gravity of the microlens 4 and opening area 3 positioned to the right as viewed in Fig. 1 relative to the center of gravity of the light reception area of the photodiode 5. The pixel 1 of the third column has the centers of gravity of the microlens 4 and opening area 3 positioned at the center of gravity of the light reception area of the photodiode 5. The pixel 1 of the fifth column has the centers of gravity of the microlens 4 and opening area 3 positioned to the left as viewed in Fig. 2 relative to the center of gravity of the light reception area of the photodiode 5.

As described above, the pixel 1 disposed nearer to the peripheral area than the center of the pixel group has a center of gravity of the photodiode 5 positioned nearer to the peripheral area than the centers of gravity of the microlens 4 and opening area 3. Thus, light passing through the microlens 4 and being incident upon the photodiode 5 is not intercepted by the light-shielding area of the light-shielding layer 2. A difference between the maximum and minimum values of output signals of the pixels at different locations in the image sensor illustrated in Figs. 1 and 2 can thus be reduced to a level less than 10% of the average of the output signals. This is because light converged on the photodiode 5 is not intercepted by the light-shielding layer 2 and a variation in light reception sensitivities can be reduced.

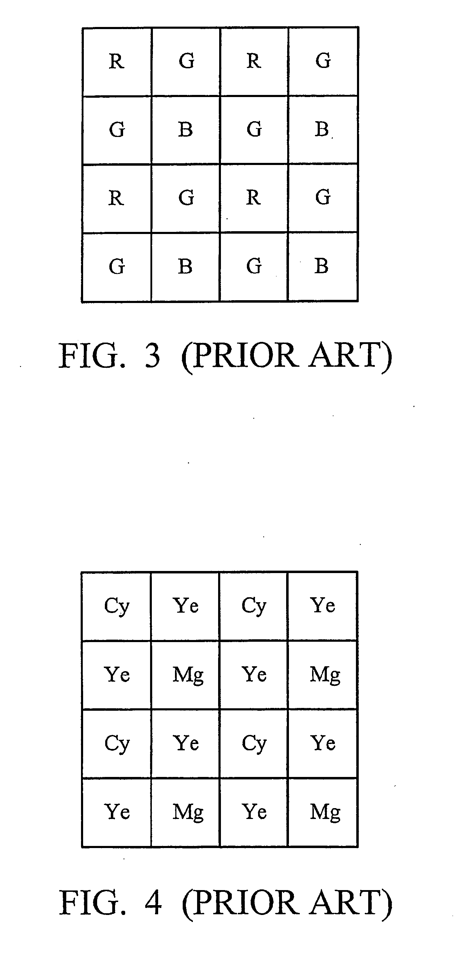

The color filter layer 6 used in the image sensor 10 illustrated in Figs. 1 and 2 can be a two-dimensional color filter array (CFA) including a periodic pattern of dyes of different primary colors such as red (R), green (G) and blue (B) filters, as illustrated in Fig. 3. The periodic pattern illustrated in Fig. 3 is a so-called Bayer pattern, including a red (R) filter, a blue (B) filter and a pair of green (G) filters. Moreover, the color filter layer 6 illustrated in Figs. 1 and 2 can also be a two-dimensional color filter array including a periodic pattern of a cyan (Cy) filter, a magenta (Mg) filter and a pair of yellow (Ye) filters, as illustrated in Fig. 4.

Although the output signal variation of pixels at different locations in an image sensor can be improved by the relative arrangement illustrated in Fig. 1. Some issues such as "color separation" may occur in an image sensor with structures similar to that illustrated in Figs. 1 and 2. Color separation may be discovered when an image sensor is subjected to a chip probe (CP) test in which an image sensor is examined under a collimated white light. Color separation may occur in the photodiode or photoelectric conversion element 5 when the image sensor is formed in an irregular pattern rather a radially symmetrical pattern due to line routing or other device design requirements. An image sensor suffering from color separation may cause "image shading" in an optoelectronic device using the image sensor, thus, optoelectronic device may display abnormal images.

Attachments 1 and 2 are simulated images of an image sensor (not shown) having a structure similar to that illustrated in Fig. 1, wherein the image sensor incorporates a CFA arranged in the Bayer pattern illustrated in Fig. 3. The simulated images were obtained by a CP test using a collimated white light, wherein attachment 1 shows a simulated image obtained by the image sensor having photodiodes with only one-axial asymmetrical, such as with x-axial asymmetrical, and attachment 2 shows a simulated image obtained by an image sensor having photodiodes with at least two-axial asymmetries, such as x-axial and y-axial asymmetries.

Referring to attachment 1, the simulated image shows an uneven image profile presenting a red-deflected color at an upper portion of the image sensor and a blue-deflected color at a lower portion of the image sensor. In attachment 2, the illustrated image shows an uneven image profile presenting a red-deflected color at an upper-left portion of the image sensor, a blue-deflected color at a lower- right portion of the image sensor, and a green-deflected color at an upper-right portion and a lower-left portion of the image sensor. These uneven image profiles illustrated in attachments 1 and 2 are the above described "color separation" and are not desirable in an image sensor because "image shading" may occur in an optoelectronic device employing said image sensor.

### SUMMARY

The invention provides color filter arrays (CFA) and image sensors using the same for reducing or preventing color separation.

An exemplary embodiment of a color filter array comprises a two-dimensional array including a plurality of first color filters, a plurality of second color filters, and a plurality of third color filters, wherein the first, second and third color filters are periodically arranged, and at least the first, second and third color filters formed in a first region of the two-dimensional array and the first, second and third color filters formed in a second region of the two-dimensional array are symmetrically mirrored.

An exemplary embodiment of an image sensor comprises a semiconductor substrate with a plurality of photoelectric conversion elements formed therein. A light-shielding layer comprising a plurality of opening areas, each exposing a part of the photodiode, is formed over the semiconductor substrate. A color filter array is superimposed over the light-shielding layer, wherein the color filer array comprises a two-dimensional array comprising a plurality of first color filters, a plurality of second color filters, and a plurality of third color filters. A plurality of microlens superimposes over the color filter array, each covering the opening area of the underlying light-shielding layer. The first, second and third color filters are periodically arranged, and at least the first, second and third color filters formed in a first region of the two-dimensional array and the first, second and third color filters formed in a second region of the two-dimensional array are symmetrically mirrored.

A detailed description is given in the following embodiments with reference to the accompanying drawings.

### BRIEF DESCRIPTION OF THE DRAWINGS

The present invention can be more fully understood by reading the subsequent detailed description and examples with references made to the accompanying drawings, wherein:

Fig. 1 is a schematic top view showing a conventional image sensor;

Fig. 2 is a cross sectional view of pixels in the first, third and fifth columns of the image sensor shown in Fig. 1;

Fig. 3 shows a conventional color filter array including a pattern of red (R), green (G) and blue (B) filters;

Fig. 4 shows a conventional color filter array including a pattern of cyan (Cy), magenta (Mg), yellow (Ye) filters;

Fig. 5 is a schematic top view showing an image sensor according to an embodiment of the invention;

Fig. 6 is a cross sectional view of pixels in the first, fourth and eighth columns of the image sensor shown in Fig. 5;

Fig. 7 shows a color filter array including a pattern of red (R), green (G) and blue (B) filters according to an embodiment of the invention;

Fig. 8 shows an arrangement of a color filter array including a pattern of red (R), green (G) and blue (B) filters according to another embodiment of the invention; and

Fig. 9 shows an arrangement of a color filter array including a pattern of red (R), green (G) and blue (B) filters according to yet another embodiment of the invention.

### DESCRIPTION

The following description is of the best-contemplated mode of carrying out the invention. This description is made for the purpose of illustrating the general principles of the invention and should not be taken in a limiting sense. The scope of the invention is best determined by reference to the appended claims.

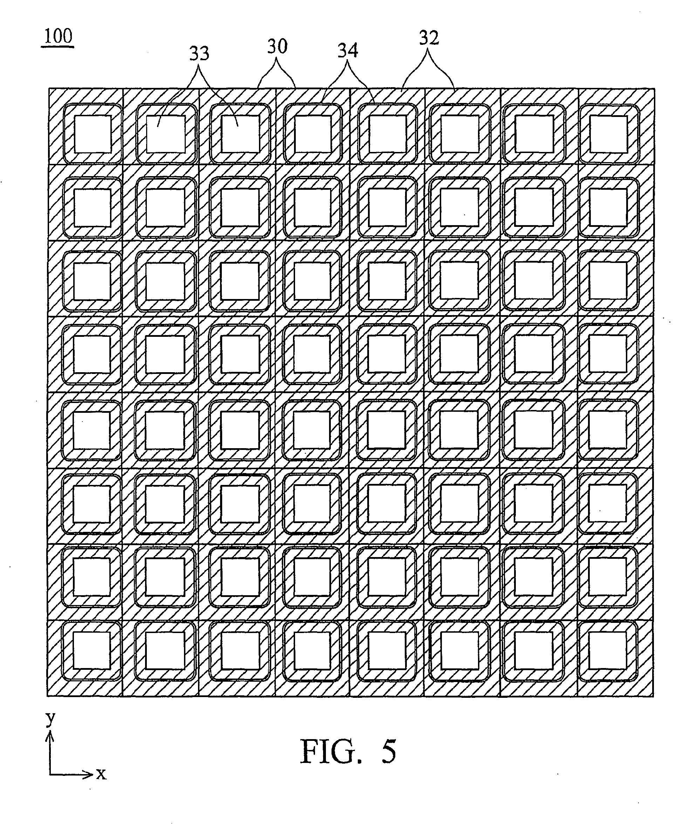

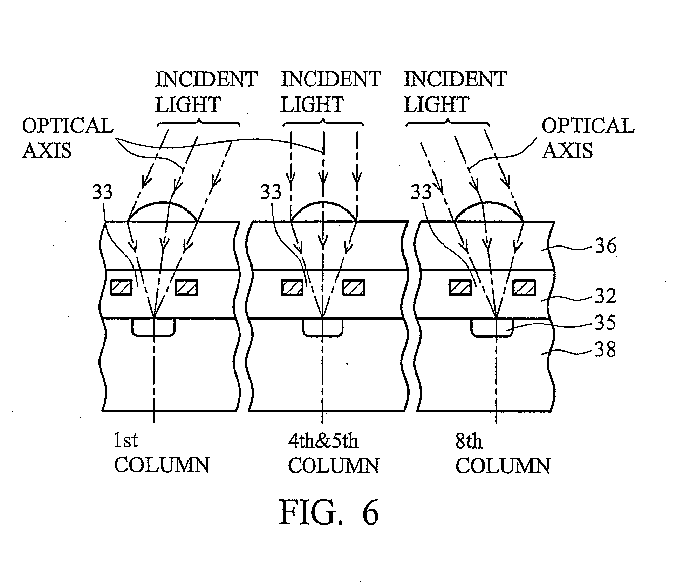

Figs. 5 and 6 are schematic diagrams showing an image sensor 100 according to an exemplary embodiment of the invention.

Fig. 5 shows a plan view of a pixel group of the image sensor 100 and Fig. 6 shows a cross sectional view of pixels in the first, third/fourth and eighth columns of the pixel group shown in Fig. 5.

As shown in Figs. 5 and 6, reference numeral 30 represents a pixel having a photodiode or photoelectric conversion element 35 formed in the surface layer of a semiconductor substrate (e.g. a Si substrate) 38. Reference numeral 32 represents a light-shielding layer having a light-shielding area for shielding the area of the pixel 30 excepting the photodiode 35. Reference numeral 33 represents an opening area formed through the light-shielding layer 32 through which light is incident upon the photodiode 35. Reference numeral 34 represents a microlens for converging light on the photodiode 35. Reference numeral 36 represents a color filter layer of red, green, blue, or other colors. Although, for the simplicity, an area of only 8x8 pixels is shown in Fig. 5, there are, in practice, several hundred thousands to several millions of pixels disposed two-dimensionally.

In Figs. 5 and 6, the pixel 30 disposed nearer the peripheral area than the center of the pixel group has a center of gravity of the light reception area of the photodiode 35 positioned nearer the peripheral area than the centers of gravity of the microlens 34 and opening area 33. The optical axis of light converged by the microlens 34 thus becomes coincident with the center of gravity of the light reception area of the photodiode 35.

Similar to the prior art image conventional image sensor illustrated in Fig.1, the pixel 30 of the first column has the centers of gravity of the microlens 34 and opening area 33 positioned to the right as shown in Fig. 5 relative to the center of gravity of the light reception area of the photodiode 35. The pixel 30 of the fourth and fifth columns have the centers of gravity of the microlens 34 and opening area 33 positioned at the center of gravity of the light reception area of the photodiode 35. The pixel 30 of the eighth column has the centers of gravity of the microlens 34 and opening area 33 positioned to the left as viewed in Fig. 6 relative to the center of gravity of the light reception area of the photodiode 35. The center of gravity of the opening area 33 is the center of gravity of an optional mass disposed in the opening area 33.

As described above, the pixel 30 disposed nearer to the peripheral areanearer the peripheral area than the center of the pixel group center of gravity of the photodiode 35 positioned nearer to the peripheral area than the centers of gravity of the microlens 34 and opening area 33. Thus, the light-shielding area of the light-shielding layer 32 does not intercept light passing through the microlens 34 to be incident on the photodiode 35. A difference between the maximum and minimum values of output signals of the pixels in the image sensor 100 at different locations in the image sensor of Figs. 5 and 6 can be reduced to a level less than 10% of the average of output signals but formed with color separation issues. The patterns of the color filter layer 36 of the image sensor 100 illustrated in Figs. 5 and 6 are modified as described in the following to further reduce or prevent color separation.

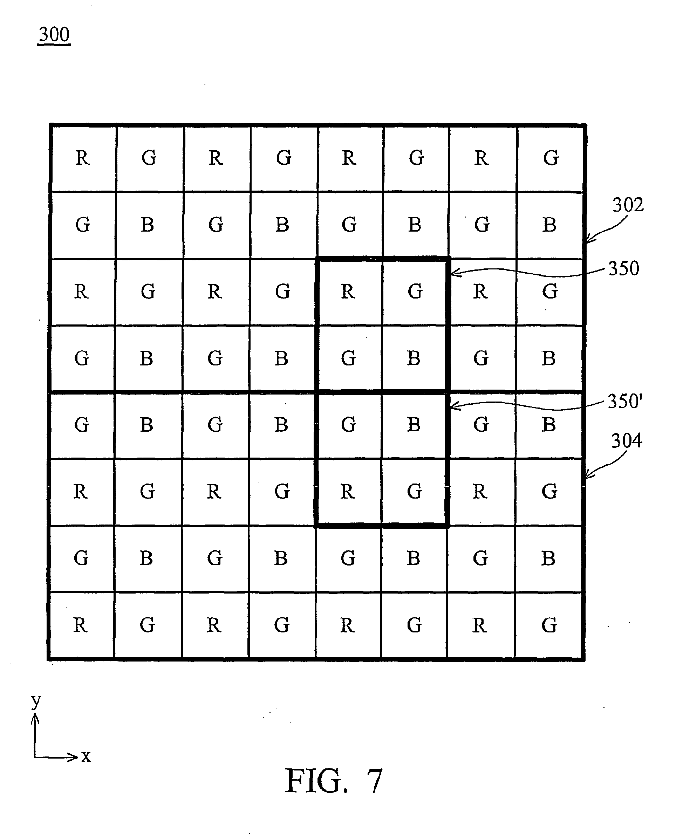

Fig. 7 shows a color filter array including a periodic pattern of red (R), green (G) and blue (B) filters according to an embodiment of the invention. As shown in Fig. 7, an exemplary color filter array 300 for the color filter layer 36 is provided for the purpose of reducing even preventing color separation issues of an image sensor, especially while the photodiodes 35 used in the image sensor 100 are x-axial asymmetrical patterns (not shown). As shown in Fig. 7, the color filter array 300 is illustrated as a two-dimensional color filter array substantially divided into two regions 302 and 304 along a center of the color filter array 300 in an x-direction, each including a periodic pattern of dyes of different primary colors such as red (R), green (G) and blue (B) filters.

As shown in Fig. 7, the region 302 of the color filter array 300 is illustrated as an upper region of the color filter array 300 and the region 304 color filter array 300 is illustrated as a lower region of the color filter array 300 in Fig. 7. In the region 302, the periodic pattern of red (R), green (G) and blue (B) filters of the color filter array 300 are arranged in a Bayer pattern 350 which includes one R filter, one B filter, and a pair of G filters.

The patterns of the color filter array 300 in the region 304 are arranged as a periodic pattern of dyes of different colors such as red (R), green (G) and blue (B) filters but with a modified Bayer pattern configuration different from the Bayer pattern configuration 350 in the region 302. The modified Bayer pattern configuration 350' in the region 304 and the Bayer pattern configuration 350 in the region 302 are mirror symmetrical. Accordingly, the periodic pattern of dyes the R, G and B filters in the region 302 and 304 are symmetrically mirrored against an x-direction.

Attachment 3 shows a simulated image of an image sensor incorporating the CFA 300 illustrated in Fig. 7 having photodiodes in asymmetrical x-axial patterns. The simulated image is obtained in a CP test using a collimated white light. As shown in attachment 3, the simulated image shows an even image profile presenting no red-deflected color in an upper portion (i.e. the region 302) of the image sensor and no blue-deflected color in a lower portion (i.e. the region 304) of the image sensor. A symmetrical image profile with even color uniformity and color symmetry is obtained and the conventional color separation issue is thus reduced or even prevented. An image with better white balance can be also provided.

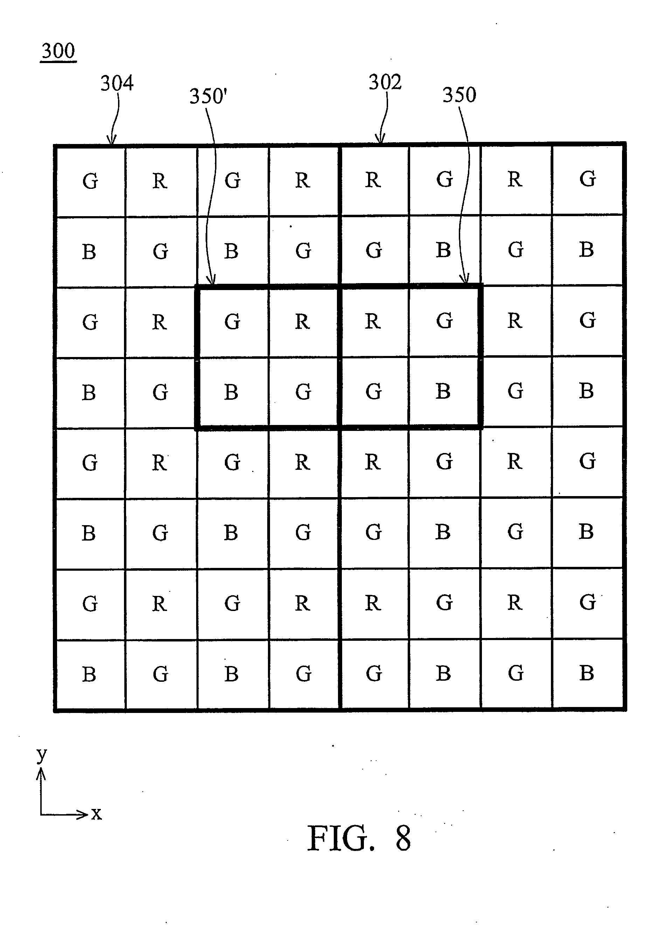

Fig. 8 shows an arrangement of a color filter array including a pattern of red (R), green (G) and blue (B) filters according to another embodiment of the invention.

In this embodiment, the color filter array 300 illustrated in Fig. 7 is modified while the photodiodes 35 used in the image sensors are of asymmetrical y-axial patterns (not shown), as shown in Fig. 8. In Fig. 8, the color filter array 300 is substantially divided into two regions 302 and 304 at a center of the color filter array 300 along a y-direction. The region 302 of the color filter array 300 is illustrated as a right region of the color filter array 300 and the region 304 of the color filter array 300 is illustrated as a left region of the color filter array 300.

In the region 302, the periodic pattern of red (R), green (G) and blue (B) filters of the color filter array 300 are arranged in a Bayer pattern configuration 350 which including one R filter, one B filter, and a pair of G filters. The patterns of the color filter array 300 in the region 304 are arranged as a periodic pattern of dyes of different colors such as red (R), green (G) and blue (B) filters but with a modified Bayer pattern configuration different from the Bayer pattern configuration 350 in the region 302.

The modified Bayer pattern configuration 350' in the region 304 and the Bayer pattern configuration 350 in the region 302 are symmetrically mirrored. Accordingly, the periodic pattern of dyes the R, G and B filters in the region 302 and 304 are symmetrically mirrored against an x-direction. Accordingly, a symmetrical image profile can be obtained but, for simplicity, are not shown here, and the conventional color separation is thus reduced or even prevented. An image with better white balance can be also provided.

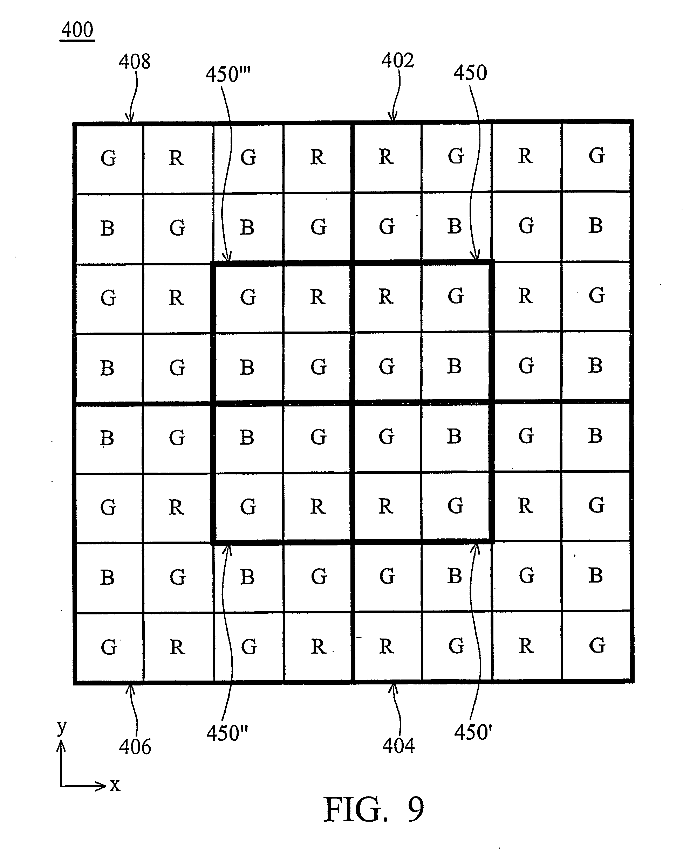

Fig. 9 shows an arrangement of a color filter array including a pattern of red (R), green (G) and blue (B) filters according to yet another embodiment of the invention.

As shown in Fig. 9, a color filter array 400 is a two-dimensional color filter array substantially divided into four regions 402, 404, 406 and 408 clockwise along a center of the color filter array 300 along both x and y directions, each including a periodic pattern of dyes of different colors such as red (R), green (G) and blue (B) filters.

As shown in Fig. 9, the region 402 of the color filter array 400 is illustrated as an upper-right region of the color filter array 400, the region 404 of the color filter array 400 is illustrated as a lower-right region of the color filter array 300, the region 406 of the color filter array 400 is illustrated as an lower-left region of the color filter array 400, and the region 404 of the color filter array 400 is illustrated as an upper-left region of the color filter array 400.

In the region 402, the periodic pattern of red (R), green (G) and blue (B) filters of the color filter array 400 is arranged as Bayer pattern 450 which includes one R filter, one B filter, and a pair of G filters. The patterns of the color filter array 400 in the regions 404, 406 and 408 are arranged as a periodic pattern of dyes of different colors such as red (R), green (G) and blue (B) filters but with a modified Bayer pattern configuration different from the Bayer pattern configuration 450 in the region 402.

The modified Bayer pattern configuration 450' in the regions 404 and the Bayer pattern configuration 450 in the region 402 are symmetrically mirrored corresponding to the x-axis. The modified Bayer pattern configuration 450'" in the regions 408 and the Bayer pattern configuration 450 in the region 402 are symmetrically mirrored corresponding to the y-axis. The modified Bayer pattern configuration 450" in the regions 406 is symmetrically mirrored corresponding to the y-axis with the modified Bayer pattern configurations 450' in the region 404 and is symmetrically mirrored corresponding to the x-axis with the modified Bayer pattern configurations 450'" in the region 408. The modified Bayer pattern configuration 450" in region 406 is also symmetrically radial corresponding to the Bayer pattern configuration 450 in the region 402.

Attachment 4 shows a simulated image of an image sensor incorporating the CFA 400 illustrated in Fig. 9 and having photodiodes of both x-axial and y-axial asymmetrical patterns. The simulated image is obtained in a CP test using a collimated white light.

As shown in attachment 4, the illustrated image shows an even image profile presenting no red -deviated color at an upper-left portion (i.e. the region 408) of the image sensor, no blue-deviated color at a lower-right portion (i.e. the region 404) of the image sensor, and no green-deviated color at an upper-right and a lower-left and portions (i.e. the region 402 and 406, respectively) of the image sensor. A symmetrical image profile is obtained and the conventional color separation is thus reduced or even prevented. An image with better white balance can be also provided.

The color filter arrays 300 and 400 illustrated in Figs. 7, 8 and 9 are illustrated as two-dimensional color filter array including a periodic pattern of red (R), green (G) and blue (B) filters and are not limited thereto. The color filter arrays 300 and 400 illustrated in Figs. 7, 8 and 9 can additionally be a two-dimensional color filter array including a periodic pattern of different colors of cyan (Cy), magenta (Mg), yellow (Ye) filters. The red pattern can be substituted by the cyan pattern, the green pattern can be substituted by the yellow pattern and the blue pattern can be substituted by the magenta pattern. Note that while optoelectronic devices such as digital cameras, cellular phones, and toys incorporate the described image sensors illustrated in Fig. 1 with a CFA illustrated in Fig. 7, 8 or 9, the signal output of the photodiode or photoelectric conversion elements in the region covered by such modified CFA patterns illustrated in, for example, Fig. 7, 8 or 9 is to be suitably adjusted by wire routing or by software to conform to image protocols for correctly presenting an image.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A color filter array, comprising:
a two-dimensional array comprising:
a plurality of first color filters;
a plurality of second color filters; and
a plurality of third color filters, wherein the first, second and third color filters are periodically arranged;
wherein at least the first, second and third color filters formed in a first region of the two-dimensional array and the first, second and third color filters formed in a second region of the two-dimensional array are symmetrically mirrored.

2. The color filter array as claimed in claim 1, wherein the first, second and third color filters formed in a first region of the two-dimensional array and the first, second and third color filters formed in a second region of the two-dimensional array are symmetrically mirrored corresponding to a x-axis or y-axis of the two-dimensional array.

3. The color filter array as claimed in claim 1, wherein the two-dimensional array are clockwise defined into a first, a second, a third and a fourth region corresponding to a intersection of a first and a second axes, wherein the first, second and third color filters formed in the second and fourth regions of the two-dimensional array and the first, second and third color filters formed in a first region of the two-dimensional array are symmetrically mirrored corresponding to either the first axis or the second axis, and the first, second and third color filters formed in a second and fourth regions of the two-dimensional array and the first, second and third color filters formed in the third region of the two-dimensional array and the first, second and third color filters formed in the first region are symmetrically radial corresponding to the intersection of the first and the second axes.

4. The color filter array as claimed in claim 3, wherein the first, second and third color filters formed in the third region of the two-dimensional array and the first, second and third color filters formed in the second or fourth region are symmetrically mirrored corresponding to either the first axis or the second axis.

5. The color filter array as claimed in claim 1 or 3, wherein the first color filters, the second color filters and the third color filters are of different colors selected from a group consisting of green, blue and red.

6. The color filter array as claimed in claim 1 or 3, wherein the first color filters, the second color filters and the third color filters are of different colors selected from a group consisting of cyan, magenta and yellow.

7. An image sensor, comprising:
a semiconductor substrate with a plurality of photoelectric conversion elements formed therein;
a light shielding layer formed over the semiconductor substrate, having a plurality of opening areas, each exposing a part of the photodiode;
a color filter array superimposed over the light-shielding layer, wherein the color filer array comprises:
a two-dimensional array comprising a plurality of first color filters, a plurality of second color filters, and a plurality of third color filters, wherein the first, second and third color filters are periodic arranged,
and at least the first, second and third color filters formed in a first region of the two-dimensional array and the first, second and third color filters formed in a second region of the two-dimensional array are symmetrically mirrored;
and
a plurality of microlenses, superimposed over the color filter array, each covering the opening area of the underlying light shielding layer.

8. The image sensor as claimed in claim 7, wherein the first, second and third color filters formed in a first region of the two-dimensional array and the first, second and third color filters formed in a second region of the two-dimensional array are symmetrically mirrored corresponding to a x-axis or y-axis of the two-dimensional array.

9. The image sensor as claimed in claim 7, wherein the two-dimensional array are clockwise defined into a first, a second, a third and a fourth region corresponding to a intersection of a first and a second axes, wherein the first, second and third color filters formed in the second and fourth regions of the two-dimensional array and the first, second and third color filters formed in a first region of the two-dimensional array are symmetrically mirrored corresponding to either the first axis or the second axis, and the first, second and third color filters formed in a second and fourth regions of the two-dimensional array and the first, second and third color filters formed in the third region of the two-dimensional array and the first, second and third color filters formed in the first region are symmetrically radial corresponding to the intersection of the first and the second axes.

10. The image sensor as claimed in claim 9, wherein the first, second and third color filters formed in the third region of the two-dimensional array and the first, second and third color filters formed in the second or fourth region are symmetrically mirrored corresponding to either the first axis or the second axis.

11. The image sensor as claimed in claim 7 or 9, wherein the first color filters, the second color filters and the third color filters are of different colors selected from a group consisting of green, blue and red.

12. The image sensor as claimed in claim 7 or 9, wherein the first color filters, the second color filters and the third color filters are of different colors selected from a group consisting of cyan, magenta and yellow.
